# EUROPÄISCHE PATENTSCHRIFT

(11) **EP 2 039 502 B1**
(45) Veröffentlichungstag und Bekanntmachung des Hinweises auf die Patenterteilung: **03.08.2011**
(21) Anmeldenummer: 08162277.1
(22) Anmeldetag: 13.08.2008
(51) Int. Cl.: B29D 30/16, B29D 30/30, B29D 30/60, B60C 1/00, B60C 9/18, B60C 11/18

(54) **Verfahren zur Herstellung eines Laufstreifens eines Fahrzeugluftreifens mit einem Gürtel und einem Laufstreifen**
Method for producing a running strip of a vehicle pneumatic tyre with a belt and running strip
Procédé de fabrication d'une bande de roulement d'un pneu de véhicule doté d'une ceinture et d'une bande de roulement

(30) Priorität: 22.09.2007 DE 102007045359
(43) Veröffentlichungstag der Anmeldung: 25.03.2009
(73) Patentinhaber: Continental Reifen Deutschland GmbH, 30165 Hannover (DE)
(72) Erfinder: Frerichs, Udo, 30855 Langenhagen (DE)
(74) Vertreter: Finger, Karsten

(56) Entgegenhaltungen:
- EP-A- 1 199 192
- EP-A- 1 236 587
- EP-A- 1 632 367
- EP-A- 1 657 050
- EP-A- 1 837 206
- JP-A- 2001 347 809
- JP-A- 2004 025 535
- US-A- 5 046 542
- US-A1- 2002 036 041

## Beschreibung

Die Erfindung betrifft ein Verfahren zur Herstellung eines Laufstreifens eines Fahrzeugluftreifens mit einem Gürtel und einem Laufstreifen aus radial innerer, den Gürtel abdeckender erster Kautschuklage (Base) und radial äußerer, die Straßenkontaktfläche bildender zweiter Kautschuklage (Cap) **gemäß den Merkmalen des Oberbegriffs von Anspruch 1**, bzw. Anspruch 2.

Ein verfanhren dieser Art ist beispielsweise aus der EP-A-1 199 192 bekannt.

Derartige Fahrzeugluftreifen mit einem Gürtel und einem Laufstreifen, wobei der Laufstreifen aus radial innerer, den Gürtel abdeckender erster Gummilage (Base) und radial äußerer, die Straßenkontaktfläche bildender zweiter Gummilage (Cap) ausgebildet ist, sind weit verbreitet. Die radial innere, den Gürtel abdeckende erste Gummilage wird dabei üblicherweise aus einem einzigen Kautschukmaterial mit hohem Rußanteil hergestellt.

Die Straßenkontaktfläche bildende zweite Gummilage (Cap) wird entweder ebenfalls aus nur einem Kautschukmaterial mit hohem Rußanteil oder aus nur einem Kautschukmaterial mit hohem Silicaanteil hergestellt.

Daneben sind Fahrzeugluftreifen bekannt, deren radial äußere, die Straßenkontaktoberfläche bildende zweite Gummilage aus zwei Kautschukmaterialien hergestellt ist. Dabei kann das erste Kautschukmaterial mit reduziertem Rußanteil ausgebildet sein. Um die Ableitung elektrostatischer Aufladungen aus dem Gürtelbereich zur Straßenoberfläche zu gewährleisten, ist bei diesen Fahrzeugluftreifen das zweite Kautschukmaterial mit hohem Rußanteil in kleinen axialen Abschnitten in der radial äußeren, die Straßenkontaktoberfläche bildenden zweite Gummilage ausgebildet.

Aufgrund der hohen über den Laufstreifen einzustellenden Anforderungen an den Straßenkontakt und die Ableitung elektrischer Aufladungen, ist bei derartigen Fahrzeugluftreifen eine Feinabstimmung von Fahreigenschaften, die unabhängig von der Straßenoberfläche sind - wie z.B. Rollwiderstand, Fahrstabilität, Dämpfung und Komfort - nur sehr eingeschränkt mit Hilfe des Laufstreifens möglich.

Aus der EP0875367B1 ist ein Fahrzeugluftreifen mit einer einzigen Laufstreifenschicht (Monolaufstreifen) bekannt, bei der zwei alternierende Streifen aus unterschiedlichem Material die Fahrbahnkontaktfläche bilden, wobei sich die Streifen vom Gürtel bis zur Fahrbahnoberfläche erstrecken. Auch hier hat einer beiden Streifen die Funktion, die elektrische Ableitung zwischen Gürtel und Fahrbahnoberfläche zu gewährleisten. Beide Streifen stehen in direktem Straßenkontakt. Aufgrund der hohen über den Laufstreifen einzustellenden Anforderungen an den Straßenkontakt und die Ableitung elektrischer Aufladungen, ist auch bei derartigen Fahrzeugluftreifen eine Feinabstimmung von Fahreigenschaften, die unabhängig von der Straßenoberfläche sind - wie z.B. Rollwiderstand, Fahrstabilität, Dämpfung und Komfort - nur sehr eingeschränkt mit Hilfe des Laufstreifens möglich.

Aus der DE19718699C1 ist ein Fahrzeugluftreifen mit einer einzigen Laufstreifenschicht (Monolaufstreifen) bekannt, bei der zwei alternierende Streifen aus unterschiedlichem Material die Fahrbahnkontaktfläche bilden, wobei sich die Streifen vom Gürtel bis zur Fahrbahnoberfläche erstrecken. Die beiden Streifen weisen eine unterschiedliche Härte auf, um die Fahreigenschaften zu beeinflussen. Da beide Streifen direkt nebeneinander in Berührkontakt zur Straße stehen sollen, wirken alle zwischen Straßenoberfläche und Bodenaufstandsfläche des Fahrzeugreifens einwirkenden Kräfte direkt auf beide Materialien. Unterschiedlicher Abrieb und unterschiedliche Reibbeiwerte bei allen Witterungslagen und auf allen Straßenoberflächen müssen bei der Verwendung der Materialen berücksichtigt werden. Aufgrund der durch den Bodenkontakt bedingten hohen Anforderungen sind auch bei diesen Fahrzeugluftreifen Feineinstellungen von Fahreigenschaften, die unabhängig von der Straßenoberfläche sind - wie z.B. Rollwiderstand, Fahrstabilität, Dämpfung und Komfort - nur sehr eingeschränkt mit Hilfe des Laufstreifens möglich.

Aus der EP 11 99 192 A2 ist ein Reifen mit einem Laufstreifen mit einer radial inneren die Base bildenden Lage und einer radial äußeren die Cap bildenden Lage bekannt. Die Base bildende Lage ist aus einem zentralen mittleren Abschnitt und aus beiderseits des zentralen Abschnitts gebildeten weiteren Abschnitt ausgebildet. Auch aus der US 2002/0036041 A1 ist es bekannt, einen Laufstreifen mit radial innerer Base und radial äußerer Cap auszubilden und die Base aus einem axial inneren Baseabschnitt und beiderseits des axial inneren Abschnitts jeweils aus einem Schulterabschnitt auszubilden. Eine derartige Ausbildung eines Laufstreifens mit Cap und Base, bei dem die Base in axialer Richtung dreigeteilt mit einem zentralen Abschnitt, der zwischen zwei Schulterabschnitten angeordnet ist, ausgebildet ist, ist auch aus der US 5,046,542 bekannt.

Der Erfindung liegt die Aufgabe zugrunde, mit einfachen Mitteln eine Verbesserung der individuellen Einstellung von Fahreigenschaften, die unabhängig von der Straßenoberfläche sind - wie z.B. Rollwiderstand, Fahrstabilität, Dämpfung und Komfort - und somit keinen Einfluss auf andere wichtige Eigenschaften wie Abrieb und Reibbeiwerte haben, zu ermöglichen.

Erfindungsgemäß wird die Aufgabe durch das Verfahren zur Herstellung eines Laufstreifens eines Fahrzeugluftreifens mit einem Gürtel und einem Laufstreifen aus radial innerer, den Gürtel abdeckender erster Kautschuklage (Base) und radial äußerer, die Straßenkontaktfläche bildender zweiter Kautschuklage (Cap), bei dem die radial innere, den Gürtel abdeckende erste Kautschuklage (Base) in axialer Richtung des Laufstreifens wechselweise aus mindestens zwei unterschiedlichen Kautschukmischungen bzw. Kautschukmischungskombinationen aufgebaut wird, und radial außerhalb auf der radial inneren, den Gürtel abdeckenden ersten Kautschuklage (Base) die radial äußere, die Straßenkontaktfläche bildende zweite Kautschuklage (Cap) aufgebaut wird, wobei die radial innere, den Gürtel abdeckende erste Kautschuklage (Base) aus wenigstens zwei extrudierten Streifen aus unterschiedlicher Kautschukmischung bzw. Kautschukmischungskombinationen durch schraubenförmiges Wickeln um die Laufstreifenachse aufgebaut wird, gemäß den Merkmalen von Anspruch 1 gelöst, wobei die beiden Streifen in mehreren axial ersten (d) und wenigstens einem axial zweiten Erstreckungsbereich(en) (c) des Laufstreifens derart aufgespult werden, dass in den ersten Bereichen (d) nur der erste Streifen unter Überlappung seiner Windungen aufgespult wird und dass im zweiten Erstreckungsbereich (c) sowohl der erste als auch der zweite Streifen jeweils unter Nebeneinanderanordnung ihrer jeweils eigenen Windungen und radial aufeinander schraubenförmig aufgespult werden.

Die Aufgabe wird auch gelöst durch das Verfahren gemäß den Merkmalen von Anspruch 2, wobei die beiden Streifen in mehreren axial ersten (d) und wenigstens einem axial zweiten Erstreckungsbereich(en) des Laufstreifens derart aufgespult werden, dass in den ersten Bereichen (d) nur der erste Streifen unter Überlappung seiner Windungen aufgespult wird und dass im zweiten Erstreckungsbereich (c) einer der beiden Streifen unter Überlappung seiner Windungen und der andere der beiden Streifen unter Überlappung seiner Windungen oder unter Nebeneinanderanordnung seiner Windungen radial aufeinander schraubenförmig aufgespult werden, wobei das Maß der Überlappung des ersten Streifens im ersten Erstreckungsbereich (d) größer gewählt ist als das Maß der Überlappung der Streifen im zweiten Erstreckungsbereich (c).

Durch Abstimmung von Position und Material der beiden unterschiedlichen Gummimischungen in der radial inneren, den Gürtel abdeckenden ersten Gummilage (Base) können entsprechend den für jeden Fahrzeugluftreifen individuellen Erfordernissen die gewünschten Fahreigenschaften, die unabhängig von der Straßenoberfläche sind - wie z.B. Rollwiderstand, Fahrstabilität, Dämpfung und Komfort - jeweils individuell fein eingestellt werden ohne besondere Einschränkungen aus den Erfordernissen an den Straßenkontakt. Die an den Straßenkontakt gestellten hohen Erfordernisse werden über die bekannte Gestaltung der radial äußeren, die Straßenkontaktfläche bildende zweite Gummilage (Cap) erfüllt. In besonders einfacher Weise ist es durch das Verfahren möglich, die Materialverteilung in axialer und in radialer Richtung sehr fein zu dosieren.

Besonders vorteilhaft ist das Verfahren gemäß den Merkmalen von Anspruch 3, wobei die beiden Streifen unterschiedlicher Kautschukmischung gleichzeitig und in axialer Richtung in alternierender Reihenfolge ihrer Windungen schraubenförmig aufgespult werden. Dies ermöglicht den Aufbau mit kontinuierlichem Arbeitsgang und sehr kurzer Taktzeit.

Besonders vorteilhaft ist das Verfahren gemäß den Merkmalen von Anspruch 4, wobei zumindest einer der beiden Streifen längs seiner aufzuwickelnden Länge mit gesteuert verändertem Streifenquerschnitt schraubenförmig aufgespult wird.

Besonders vorteilhaft ist das Verfahren gemäß den Merkmalen von Anspruch 5, wobei die Streifen beim schraubenförmigen Aufspulen längs ihrer aufzuwickelnden Länge in ihrem

Streifenquerschnitt verändert werden. Dadurch ist es besonders einfach Weise möglich, die Materialverteilung in axialer und in radialer Richtung sehr fein zu dosieren.

Besonders vorteilhaft ist das Verfahren gemäß den Merkmalen von Anspruch 6, wobei die unterschiedlichen Kautschukmischungen Kautschukmischungen mit unterschiedlicher Härte im ausvulkanisierten Zustand sind. Auf diese Weise kann durch individuelle Anpassung der Mischungshärte den Steifigkeits- bzw. den Elastizitätsanforderungen der verschiedenen axialen Profilabschnitte entsprochen werden.

Besonders vorteilhaft ist das Verfahren gemäß den Merkmalen von Anspruch 7, wobei die unterschiedlichen Kautschukmischungen Kautschukmischungen mit unterschiedlichem E-Modul im ausvulkanisierten Zustand sind. Auf diese Weise kann durch individuelle Anpassung der Mischungshärte den Steifigkeits- bzw. den Elastizitätsanforderungen der verschiedenen axialen Profilabschnitte entsprochen werden.

Besonders vorteilhaft ist das Verfahren gemäß den Merkmalen von Anspruch 8, wobei eine der beiden Kautschukmischungen mit ersten Kurzfasern verstärkt und die andere Kautschukmischung keine Kurzfasern beinhaltet oder mit zweiten Kurzfasern verstärkt ist, die jedoch eine von den ersten Kurzfasern abweichende Verstärkung - insbesondere durch ein abweichendes Kurzfasermaterial und/oder eine abweichende Kurzfaserdichte und/oder eine abweichende Kurzfaserlänge und/oder eine abweichende Kurzfaserausrichtung im Laufstreifen - bilden. Auf diese Weise kann durch individuelle Anpassung der Mischungshärte den Steifigkeits- bzw. den Elastizitätsanforderungen der verschiedenen axialen Profilabschnitte entsprochen werden.

Die Erfindung wird im Folgenden an Hand der in den Figuren 1 bis 5 dargestellten Ausführungsbeispiele näher erläutert. Hierin zeigen:
- Fig. 1: Fahrzeugluftreifen in Querschnittsdarstellung,
- Fig. 2: schematische Querschnittsdarstellung des Aufbaukörpers zur Erläuterung der Herstellung der radial innerer, den Gürtel abdeckender erster Kautschuklage (Base) in erster Ausbildungsform,
- Fig. 3: schematische Darstellung in Seitenansicht zur Fig. 2 zur Erläuterung der Herstellung der radial innerer, den Gürtel abdeckender erster Kautschuklage (Base),
- Fig. 4: schematische Querschnittsdarstellung des Aufbaukörpers zur Erläuterung der Herstellung der radial innerer, den Gürtel abdeckender erster Kautschuklage (Base) in zweiter Ausbildungsform,
- Fig. 5: schematische Querschnittsdarstellung des Aufbaukörpers zur Erläuterung der Herstellung der radial innerer, den Gürtel abdeckender erster Kautschuklage (Base) in dritter Ausbildungsform.

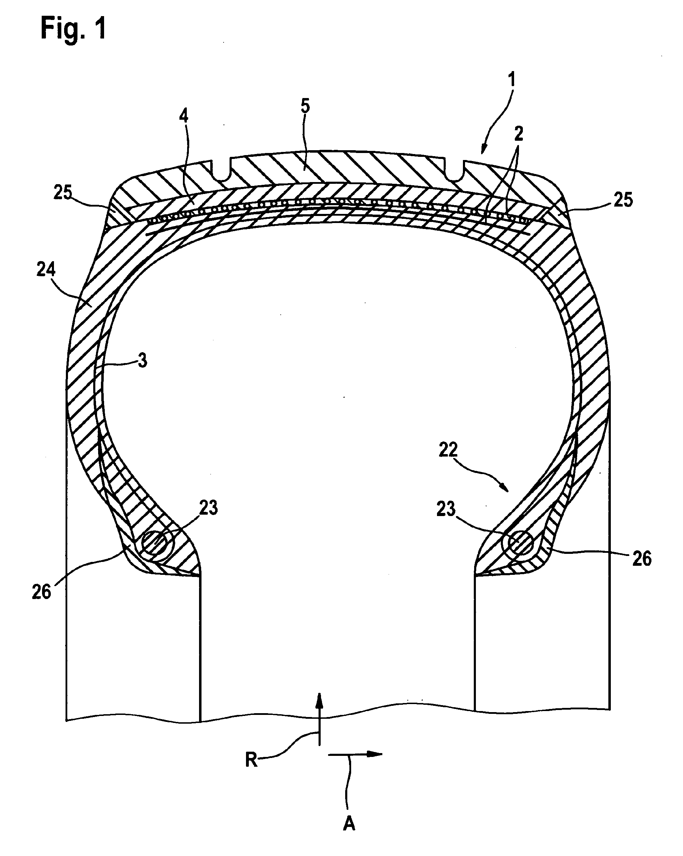

In Fig. 1 ist der Aufbau eines Fahrzeugluftreifens beispielhaft dargestellt, bei dem in einem zur Befestigung des Fahrzeugluftreifens auf einer Felge ausgebildeten rechten Wulstbereich 22 um einen Wulstkern 23 mit nicht näher dargestelltem Kernprofil eine erste Karkassenlage einer Karkasse 3 radialer Bauart außerhalb einer luftundurchlässigen Innenschicht über den rechten Schulterbereich und die Zenitebene zu dem linken Schulterbereich und den im linken Wulstbereich 22 ausgebildeten Wulstkern 23 mit Kernprofil gelegt, um den sie in herkömmlicher Weise herum verläuft. Über der ersten Karkassenlage ist in herkömmlicher Weise eine zweite Karkassenlage der Karkasse 3 gelegt, die sich ebenfalls von der in Fig.1 rechts dargestellten Seite des Reifens bis zur links dargestellten Seite erstreckt. In herkömmlicher Weise ist im Wulstbereich 22 ein nicht näher dargestellte Wulststreifen bekannter Art, ein nicht näher dargestellten Wulstverstärker bekannter Art und ein Hornprofil 26 ausgebildet und von dem Hornprofil 26 ausgehend bis in den Schulterbereich reichend ein Seitenwandgummimaterial 24 aufgelegt. Über den Umfang des Reifens reichen außerhalb der Karkassenlagen radialer Bauart angeordnet mehrere Gürtellagen eines Gürtels 2 mit in Kautschuk eingebetteten Stahlkorden. Auf den Gürtellagen des Gürtels 2, zwischen den Gürtellagen 2 und dem Laufstreifen 1 ist zusätzlich eine nicht dargestellte Bandagelage bekannter Art des Gürtels 2 mit in Umfangsrichtung ausgerichteten Festigkeitsträgern ausgebildet. Im Schulterbereich sind in bekannter Weise zusätzlich Schulterstreifen 25 aufgelegt. Den Abschluss des Reifenaufbaus bildet in bekannter Weise ein profilierter Laufstreifen 1.

Der Laufstreifen 1 ist in bekannter Weise aus einer radial äußeren Gummilage (Cap) 5 und einer radial inneren Gummilage (Base) 4 aufgebaut.

Die Lagendicke der radial inneren Gummilage (Base) 4 beträgt wenigstens 0,6 mm, beispielsweise beträgt sie 2 bis 3 mm.

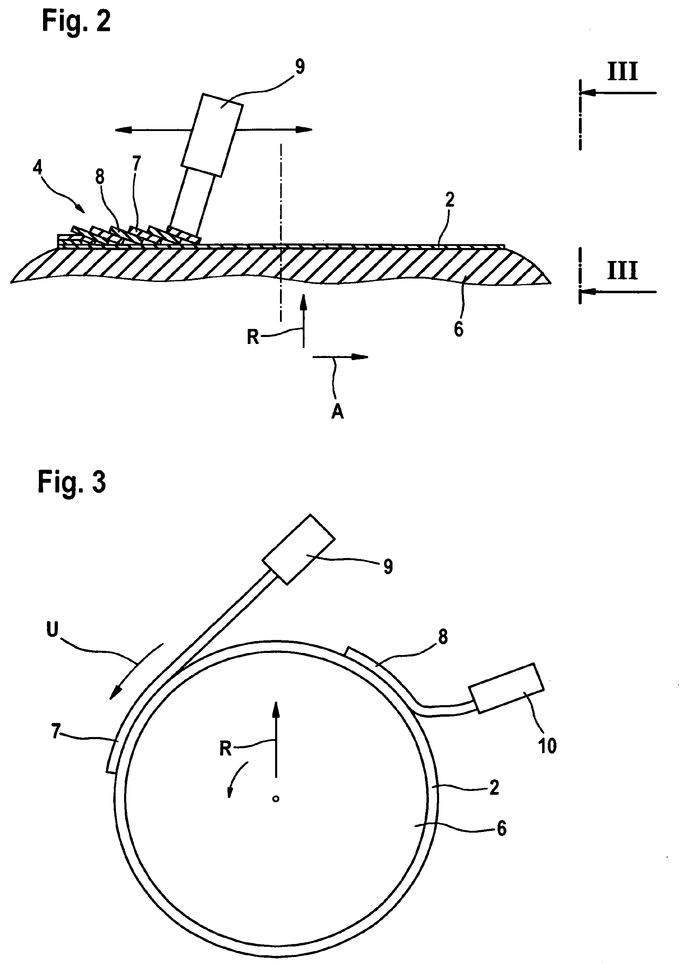

Wie in den Figuren 2 und 3 dargestellt ist, erfolgt der Aufbau des Gürtels 2 in bekannter Weise auf einem rotatorisch mit Hilfe einer nicht dargestellten Steuereinheit bekannter Art gesteuert angetriebenen Aufbaukörper 6. Der Aufbaukörper 6 ist beispielsweise eine Gürtelaufbautrommel bekannter Art, die entweder eine zylindrische Mantelfläche oder eine bereits der Gürtelform des Gürtels im Reifen adaptierte konturierte Mantelfläche bekannter Art aufweist. In alternativer Ausführung ist der Aufbaukörper 6 die bereits in Torusform aufgebaute oder zunächst zylindrisch aufgebaute und dann in Torusform gebrachte Karkasse, die entweder von innen über einen Luftfederbalg bekannter Art oder einen konturierten Formkörper gestützt wird.

Der Gürtel 2 wird dabei in herkömmlicher Weise auf der radial äußeren Mantelfläche des rotatorisch angetriebenen Aufbaukörpers 6 aufgebaut. Auf den Gürtel 2 bestehend aus einer oder mehreren Gürtellagen und ggfs. einer Bandage oder Gürtelabdecklage bekannter Art wird die radial innere Kautschuklage (Base) 4 zur Herstellung der radial inneren Gummilage (Base) 4 im fertigen Reifen aus zwei extrudierten Kautschukstreifen 7 und 8 unterschiedlichen Kautschukmaterials hergestellt. Wie in Fig. 3 zu erkennen ist, ist der Extruder 9 zur Herstellung des extrudierten Streifens 7 und der Extruder 10 zur Herstellung des extrudierten Streifens 8 radial außerhalb des Aufbaukörpers 6 in Umfangsrichtung U des Aufbaukörpers 6 versetzt zueinander angeordnet. Die beiden Extruder 9 und 10 sind auch in axialer Richtung A des Aufbaukörpers geringfügig zueinander versetzt angeordnet. Bei der gesteuerten Verdrehung des Aufbaukörpers 6 werden die extrudierten Kautschukstreifen 7 und 8 gleichzeitig über den gesamten Umfang des Gürtels 2 auf den Gürtel 2 gewickelt. Durch stufenlos gesteuerte Positionsveränderung der beiden Extruder 9 und 10 in axialer Richtung A des Aufbaukörpers 6 mit Hilfe der Steuereinheit während des Aufwickelns werden die beiden Kautschukstreifen 7 und 8 dabei schraubenförmig um die Achse des Aufbaukörpers 6 und somit des Gürtels 2 von links nach rechts in Fig. 2 über den gesamten axialen Erstreckungsbereich des Gürtels 2 aufgespult. Die axiale Positionierung der Extruder 9 und 10, deren axiale Bewegung und die Umfangsdrehgeschwindigkeit des Aufbaukörpers 6 sind dabei so aufeinander abgestimmt, dass beim Wickeln zwischen jeweils zwei Windungen des Streifens 7 eine Windung des Streifens 8 aufgewickelt wird, wobei die jeweils zueinander benachbarten Windungen der Streifen 7 und 8 unter gegenseitiger Überlappung aufgewickelt werden. Hierdurch ergibt sich das in der Querschnittsdarstellung von Fig. 2 erkennbare Wickelmuster der alternierenden überlappenden Anordnung des Kautschukstreifenmaterials 7 und 8.

Sobald die radial innere erste Kautschuklage (Base) 4 des Laufstreifens in dieser Weise vollständig aufgebaut ist, erfolgt der Aufbau der radial äußeren zweiten Kautschuklage (Cap) 5 radial außerhalb der radial inneren ersten Kautschuklage (Base) 4 direkt auf die radial inneren ersten Kautschuklage (Base) 4 in herkömmlicher nicht näher dargestellter Weise. Die radial äußere zweite Kautschuklage (Cap) 5 wird dabei ebenfalls aus extrudiertem Streifenmaterial bekannter Art schraubenförmig aufgewickelt. In alternativer Weise wird die radial äußere zweite Kautschuklage (Cap) 5 in Form eines breiten Kautschukstreifenmaterials, das sich über die gesamte Breite des Laufstreifens erstreckt und auf dem Aufbaukörper 6 unter gesteuerter Verdrehung des Aufbaukörper 6 um dessen Achse um die Base 4 über den gesamten Umfang der Base 4 aufgelegt wird, erzeugt.

Bei dem in Fig. 2 dargestellten Ausführungsbeispiel wird das Maß der Überlappung über die gesamte axiale Breite der Base je nach individuell gewünschter Ausbildung durch stufenlos gesteuerte Veränderung mit Hilfe der Steuereinheit der axialen Position der Extruder 9 und 10 relativ zueinander gezielt eingestellt und während des Wickelns ungestuft gesteuert verändert.

In einer nicht dargestellten Ausführung werden die Breite der Streifen 8 und 7 unterschiedlich groß gewählt. In alternativer Ausbildung wird die Streifenbreite der Streifen 8 und 7 gleich groß gewählt.

In einer nicht dargestellten Ausfürung wird die Dicke der Streifen 7 und 8 unterschiedlich stark gewählt. In anderer Ausführung wird die Dicke der Streifen 7 und 8 gleich groß gewählt.

In einer nicht dargestellten Ausführung ist der Extruder 9 in seinem radialen Abstand vom Aufbaukörper 6 während des Wickelns gesteuert mit Hilfe der Steuereinheit veränderbar ausgebildet. In einem Ausführungsbeispiel wird während des gemäß der o.g. Erläuterungen zu den Fig. 1 und Fig. 2 erfolgenden Aufbaus der radial inneren ersten Kautschuklage (Base) 4 der radiale Abstand des Extruders 9 vom Aufbaukörper 6 sowie die Drehgeschwindigkeit des Aufbaukörpers 6 um dessen Drehachse derart gesteuert verändert, dass der Streifen in seiner Längserstreckungsrichtung gesteuert unter Zug gesetzt und hierdurch in seiner Querschnittsfläche gesteuert verändert wird. Hierdurch wird über die gesamte axiale Erstreckung der radial inneren ersten Kautschuklage (Base) 4 eine längs der axialen Erstreckung gezielt dem individuell beabsichtigten Querschnittsverlauf entsprechend verändert eingestellte Querschnittsfläche des Streifens 7 individuell eingestellt.

In alternativer Weise wird die Querschnittsfläche dadurch geändert, dass der Streifen 7 hinter dem Extruder zwischen zwei Formrollen durchgeführt wird, deren Abstand zueinander während des Wickelns gesteuert verändert wird.

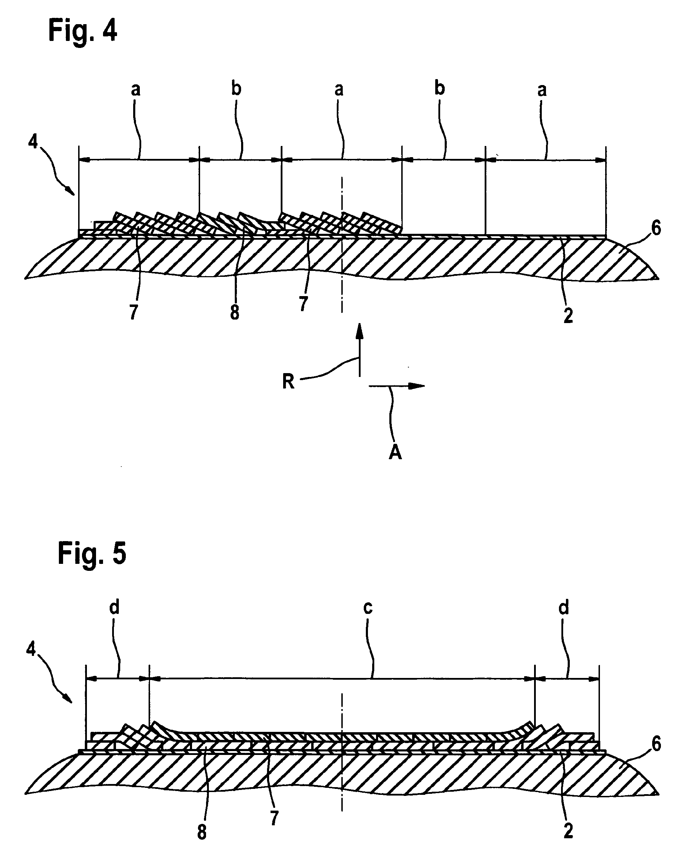

Fig. 4 zeigt eine andere Ausführung, bei der mit Hilfe der im Zusammenhang mit den Figuren 1 und 2 erläuterten gesteuert positionierbaren Extruder 9 und 10 die radial innere ersten Kautschuklage (Base) 4 über deren axialer Erstreckung auf dem Gürtel 2 in alternierend abfolgenden axialen Abschnittsbereichen a und b aufgespult wird. Dabei erfolgt in den axialen Abschnitten a ein reines Aufspulen des Kautschukstreifens 7 mit Hilfe des Extruders 9 und in den Abschnitten b ein reines Aufspulen des Kautschukstreifens 8 mit Hilfe des Extruders 10. Die benachbarten Windungen des Kautschukstreifens 7 in den Bereichen a sowie die benachbarten Windungen des Kautschukstreifens 8 in den Bereichen b sowie die unmittelbar zueinander benachbarten Windungen des Kautschukstreifens 7 und des Kautschukstreifens 8 im jeweiligen Übergangsbereich zwischen einem axialen Erstreckungsbereich a und einem benachbarten axialen Erstreckungsbereich b sind jeweils unter axialer Überlappung zueinander aufgelegt. Die Kautschukstreifen 7 und 8 werden zumindest phasenweise gleichzeitig aufgespult.

In der dargestellten Ausführung ist die axiale Breite aller Abschnitte a und b jeweils gleich groß gewählt. In anderer nicht dargestellter Ausführung ist die Erstreckungsbreite der axialen Abschnitte a und b in axialer Richtung unterschiedlich groß gewählt.

In der dargestellten Ausführung ist die axiale Erstreckungsbreite der einzelnen Abschnitte a jeweils gleich groß gewählt. In einer anderen nicht dargestellten Ausführung ist die axiale Erstreckungsbreite der einzelnen axialen Abschnitte a unterschiedlich groß gewählt.

In der dargestellten Ausführung ist die axiale Erstreckungsbreite der Abschnitte b jeweils gleich groß gewählt. In einer anderen nicht dargestellten Ausführung ist die axiale Erstreckungsbreite der axialen Abschnitte b jeweils unterschiedlich groß gewählt.

Fig. 5 zeigt eine weitere alternative Ausbildung, bei der mit Hilfe der Extruder 9 und 10 die radial innere erste Kautschuklage (Base) 4 durch gesteuertes schraubenförmiges Spulen um den Aufbaukörper 6 aufgebaut wird. In diesem Ausführungsbeispiel wird in den beiden Schulterrandabschnitten d des Gürtels 2 lediglich der Kautschukstreifen 8 mit Hilfe des Extruders 10 unter Überlappung der einzelnen benachbarten Windungen aufgebaut.

Zwischen den beiden Schulterabschnitten d ist ein mittlerer axialer Erstreckungsabschnitt c ausgebildet, in dem der Kautschukstreifen 8 mit Hilfe des Extruders 10 derart über die axiale Breite des Bereiches c aufgespult wird, dass die benachbarten Windungen des Streifens 8 sich nicht überlappen, sondern in Berührkontakt zueinander nebeneinander angeordnet sind. Auf der radialen Außenseite des in dieser Weise im mittleren axialen Erstreckungsabschnitt c aufgespulten Kautschukstreifens 8 wird der Kautschukstreifen 7 mit Hilfe des Extruders 9 ebenfalls derart aufgespult, dass seine benachbarten Windungen sich nicht gegenseitig überlappen, sondern in Berührkontakt zueinander nebeneinander angeordnet sind. Wie Fig. 5 zu entnehmen, wird hierdurch in den alternierend nebeneinander angeordneten Erstreckungsabschnitten c und d die radial innere ersten Kautschuklage (Base) 4 mit im Wesentlichen gleicher radialer Dicke, allerdings aufgrund der unterschiedlich verwendeten Materialien in den axialen Erstreckungsabschnitten c und d mit unterschiedlichen Materialeigenschaften ausgebildet.

In alternativer Ausbildung werden die beiden Kautschukstreifen 7 und 8 in den beiden Schulterabschnitten d und dem mittleren axialen Erstreckungsabschnitt c derart aufgespult, dass in den beiden Schulterabschnitten d nur der Kautschukstreifen 8 unter Überlappung seiner Windungen aufgespult wird, dass im mittleren axialen Erstreckungsabschnitt c der Kautschukstreifen 8 ebenfalls unter Überlappung seiner Windungen und der andere Kautschukstreifen 7 ebenfalls unter Überlappung seiner Windungen oder unter reiner Nebeneinanderanordnung unter Berührkontakt seiner Windungen radial aufeinander schraubenförmig aufgespult wird, wobei das axiale Erstreckungsmaß der Überlappung der benachbarten Windungen des Kautschukstreifens 8 in den beiden Schulterabschnitten d größer gewählt ist als das axiale Erstreckungsmaß der Überlappung benachbarter Windungen der Kautschukstreifen 8 und 7 im mittleren axialen Erstreckungsabschnitt c.

Wie bereits im Zusammenhang mit den Figuren 2 und 3 erläutert, wird die Cap auch bei den in den Figuren 4 und 5 dargestellten Ausführungen in entsprechender Weise auf der Base 4 aufgebaut.

Die für das Kautschukstreifenmaterial 7 und 8 in den oben genannten Figuren 1 bis 5 dargestellten und /oder beschriebenen Ausführungsbeispielen verwendeten Kautschukmischungen sind jeweils zur Herstellung einer Base bekannte Kautschukmischungen. Die beiden Kautschukmischungen der Streifen 7 und 8 sind je nach individuelle einzustellenden Eigenschaften des Fahrzeugreifens gewählte Kautschukmischungen, die im vulkanisierten Zustand im Fahrzeugreifen einen unterschiedlichen E-Modul und/oder eine unterschiedliche Härte aufweisen.

In einer nicht dargestellten Ausführung ist der Kautschukstreifen 7 der oben genannten Ausführungsbeispiele in bekannter Weise mit Kurzfasern bekannter Art verstärkt. In einer alternativen, nicht dargestellten Ausführung ist sowohl der Kautschukstreifen 7 als auch der Kautschukstreifen 8 mit Kurzfasern verstärkt, wobei der Verstärkungsgrad der Kurzfasern des Kautschukstreifens 7 und der des Kautschukstreifens 8 unterschiedlich gewählt ist. Hierzu unterscheiden sich die Kurzfasern des ersten Kautschukstreifens 7 von denen des zweiten Kautschukstreifen 8 durch das verwendete Kurzfasermaterial und/oder durch eine abweichende Kurzfaserdichte und/oder durch die Kurzfaserlänge und//oder durch eine unterschiedliche Kurzfaserausrichtung im Laufstreifen.

### Bezugszeichenliste

### (Teil der Beschreibung)

- 1: Laufstreifen
- 2: Gürtel
- 3: Karkasse
- 4: Base
- 5: Cap
- 6: Aufbaukörper
- 7: Kautschukstreifenmaterial
- 8: Kautschukstreifenmaterial
- 9: Extruder
- 10: Extruder
- 22: Wulstbereich
- 23: Wulstkern
- 24: Seitenwandgummimaterial
- 25: Schulterstreifen
- 26: Hornprofil

## Patentansprüche

1. Verfahren zur Herstellung eines Laufstreifens (1) eines Fahrzeugluftreifens mit einem Gürtel (2) und einem Laufstreifen (1) aus radial innerer, den Gürtel (2) abdeckender erster Kautschuklage (Base) (4) und radial äußerer, die Straßenkontaktfläche bildender zweiter Kautschuklage (Cap) (5), wobei die radial innere, den Gürtel (2) abdeckende erste Kautschuklage (Base) (4) in axialer Richtung A des Laufstreifens (1) wechselweise aus mindestens zwei unterschiedlichen Kautschukmischungen bzw. Kautschukmischungskombinationen aufgebaut wird, und radial außerhalb auf der radial inneren, den Gürtel (2) abdeckende erste Kautschuklage (Base) (4) die radial äußere, die Straßenkontaktfläche bildende zweite Kautschuklage (Cap) (5) aufgebaut wird, wobei die radial innere, den Gürtel (2) abdeckende erste Kautschuklage (Base) (4) aus wenigstens zwei extrudierten Streifen (7,8) aus unterschiedlicher Kautschukmischung bzw. Kautschukmischungskombinationen durch schraubenförmiges Wickeln um die Laufstreifenachse aufgebaut wird,
**dadurch gekennzeichnet,**
**dass** die beiden Streifen (7,8) in mehreren axial ersten (d) und wenigstens einem axial zweiten Erstreckungsbereich(en) (c) des Laufstreifens (1) derart aufgespult werden, dass in den ersten Bereichen (d) nur der erste Streifen (8) unter Überlappung seiner Windungen aufgespult wird und dass im zweiten Erstreckungsbereich (c) sowohl der erste (8) als auch der zweite Streifen (7) jeweils unter Nebeneinanderanordnung ihrer jeweils eigenen Windungen und radial aufeinander schraubenförmig aufgespult werden.

2. Verfahren zur Herstellung eines Laufstreifens (1) eines Fahrzeugluftreifens mit einem Gürtel (2) und einem Laufstreifen (1) aus radial innerer, den Gürtel (2) abdeckender erster Kautschuklage (Base) (4) und radial äußerer, die Straßenkontaktfläche bildender zweiter Kautschuklage (Cap) (5), wobei die radial innere, den Gürtel (2) abdeckende erste Kautschuklage (Base) (4) in axialer Richtung A des Laufstreifens (1) wechselweise aus mindestens zwei unterschiedlichen Kautschukmischungen bzw. Kautschukmischungskombinationen aufgebaut wird, und radial außerhalb auf der radial inneren, den Gürtel (2) abdeckende erste Kautschuklage (Base) (4) die radial äußere, die Straßenkontaktfläche bildende zweite Kautschuklage (Cap) (5) aufgebaut wird, wobei die radial innere, den Gürtel (2) abdeckende erste Kautschuklage (Base) (4) aus wenigstens zwei extrudierten Streifen (7,8) aus unterschiedlicher Kautschukmischung bzw. Kautschukmischungskombinationen durch schraubenförmiges Wickeln um die Laufstreifenachse aufgebaut wird,
**dadurch gekennzeichnet,**
**dass** die beiden Streifen (7,8) in mehreren axial ersten (d) und wenigstens einem axial zweiten Erstreckungsbereich(en) des Laufstreifens (1) derart aufgespult werden, dass in den ersten Bereichen (d) nur der erste Streifen (8) unter Überlappung seiner Windungen aufgespult wird und dass im zweiten Erstreckungsbereich (c) einer der beiden Streifen (7,8) unter Überlappung seiner Windungen und der andere der beiden Streifen (7,8) unter Überlappung seiner Windungen oder unter Nebeneinanderanordnung seiner Windungen radial aufeinander schraubenförmig aufgespult werden, wobei das Maß der Überlappung des ersten Streifens (8) im ersten Erstreckungsbereich (d) größer gewählt ist als das Maß der Überlappung der Streifen (7,8) im zweiten Erstreckungsbereich (c).

3. Verfahren zur Herstellung eines Laufstreifens gemäß den Merkmalen von Anspruch 1 oder 2,
wobei die beiden Streifen (7,8) unterschiedlicher Kautschukmischung gleichzeitig und in axialer Richtung in alternierender Reihenfolge ihrer Windungen schraubenförmig aufgespult werden.

4. Verfahren zur Herstellung eines Laufstreifens gemäß den Merkmalen von Anspruch 3,
wobei zumindest einer der beiden Streifen (7,8) längs seiner aufzuwickelnden Länge mit gesteuert verändertem Streifenquerschnitt schraubenförmig aufgespult wird.

5. Verfahren zur Herstellung eines Laufstreifens gemäß den Merkmalen von Anspruch 4,
wobei beide Streifen (7,8) beim schraubenförmigen Aufspulen längs ihrer aufzuwickelnden Länge in ihrem Streifenquerschnitt verändert werden.

6. Verfahren zur Herstellung eines Laufstreifens gemäß den Merkmalen von einem oder mehreren der vorangegangenen Ansprüche,
wobei die unterschiedlichen Kautschukmischungen Kautschukmischungen mit unterschiedlicher Härte im ausvulkanisierten Zustand sind.

7. Verfahren zur Herstellung eines Laufstreifens gemäß den Merkmalen von einem oder mehreren der vorangegangenen Ansprüche,
wobei die unterschiedlichen Kautschukmischungen Kautschukmischungen mit unterschiedlichem E-Modul im ausvulkanisierten Zustand sind.

8. Verfahren zur Herstellung eines Laufstreifens gemäß den Merkmalen von einem oder mehreren der vorangegangenen Ansprüche,
wobei eine der beiden Kautschukmischungen mit ersten Kurzfasern verstärkt und die andere Kautschukmischung keine Kurzfasern beinhaltet oder mit zweiten Kurzfasern verstärkt ist, die jedoch eine von den ersten Kurzfasern abweichende Verstärkung - insbesondere durch ein abweichendes Kurzfasermaterial und/oder eine abweichende Kurzfaserdichte und/oder eine abweichende Kurzfaserlänge und/oder eine abweichende Kurzfaserausrichtung im Laufstreifen (1) - bilden.

## Claims

1. Method for producing a tread rubber (1) of a pneumatic vehicle tyre, with a breaker belt (2) and a tread rubber (1) comprising a radially inner, first rubber layer (base) (4), covering the breaker belt (2), and a radially outer, second rubber layer (cap) (5) forming the road contact surface, the radially inner, first rubber layer (base) (4), covering the breaker belt (2), being built up in the axial direction A of the tread rubber (1) alternately from at least two different rubber mixtures or rubber mixture combinations, and the radially outer, second rubber layer (cap) (5), forming the road contact surface, being built up radially outside on the radially inner, first rubber layer (base) (4), covering the breaker belt (2), the radially inner, first rubber layer (base) (4), covering the breaker belt (2), being built up from at least two extruded strips (7, 8) of different rubber mixture or rubber mixture combinations by helical wrapping around the tread rubber axis, **characterized in that** the two strips (7, 8) are wound up in a plurality of axially first regions of extent (d) and at least one axially second region of extent (c) of the tread rubber (1) in such a way that, in the first regions (d), only the first strip (8) is wound up with its turns overlapping and **in that**, in the second region of extent (c), both the first strip (8) and the second strip (7) are helically wound up respectively with their own turns in each case arranged next to one another and radially one on top of the other.

2. Method for producing a tread rubber (1) of a pneumatic vehicle tyre, with a breaker belt (2) and a tread rubber (1) comprising a radially inner, first rubber layer (base) (4), covering the breaker belt (2), and a radially outer, second rubber layer (cap) (5) forming the road contact surface, the radially inner, first rubber layer (base) (4), covering the breaker belt (2), being built up in the axial direction A of the tread rubber (1) alternately from at least two different rubber mixtures or rubber mixture combinations, and the radially outer, second rubber layer (cap) (5), forming the road contact surface, being built up radially outside on the radially inner, first rubber layer (base) (4), covering the breaker belt (2), the radially inner, first rubber layer (base) (4), covering the breaker belt (2), being built up from at least two extruded strips (7, 8) of different rubber mixture or rubber mixture combinations by helical wrapping around the tread rubber axis, **characterized in that** the two strips (7, 8) are wound up in a plurality of axially first regions of extent (d) and at least one axially second region of extent of the tread rubber (1) in such a way that, in the first regions (d), only the first strip (8) is wound up with its turns overlapping and **in that**, in the second region of extent (c), one of the two strips (7, 8) is helically wound up with its turns overlapping and the other of the two strips (7, 8) is helically wound up with its turns overlapping or its turns arranged next to one another, radially one on top of the other, the degree of overlapping of the first strip (8) in the first region of extent (d) being chosen greater than the degree of overlapping of the strips (7, 8) in the second region of extent (c).

3. Method for producing a tread rubber according to the features of Claim 1 or 2, the two strips (7, 8) of different rubber mixture being helically wound up at the same time and in the axial direction in alternating sequence of their turns.

4. Method for producing a tread rubber according to the features of Claim 3, at least one of the two strips (7, 8) being helically wound up with a strip cross section that is changed in a controlled manner along its length to be wound up.

5. Method for producing a tread rubber according to the features of Claim 4, the two strips (7, 8) being changed in their strip cross section along their length to be wound up during the helical winding up.

6. Method for producing a tread rubber according to the features of one or more of the preceding claims, the different rubber mixtures being rubber mixtures of different hardness in the fully vulcanized state.

7. Method for producing a tread rubber according to the features of one or more of the preceding claims, the different rubber mixtures being rubber mixtures of different modulus of elasticity in the fully vulcanized state.

8. Method for producing a tread rubber according to the features of one or more of the preceding claims, one of the two rubber mixtures being reinforced with first short fibres and the other rubber mixture containing no short fibres or being reinforced with second short fibres, which however form a reinforcement that is different from the first short fibres - in particular by different short fibre material and/or a different short fibre density and/or a different short fibre length and/or a different short fibre orientation in the tread rubber (1).

## Revendications

1. Procédé de fabrication d'une bande de roulement (1) pour un bandage pneumatique de roue de véhicule qui présente une ceinture (2) et une bande de roulement (1) constituée d'une première couche de caoutchouc (4) (base) qui recouvre la ceinture (2) et d'une deuxième couche de caoutchouc (5) (chapeau) radialement extérieure et qui forme la surface de contact avec la chaussée,
la première couche de caoutchouc (4) (base) qui recouvre la ceinture (2) étant formée dans la direction axiale A de la bande de roulement (1) par une alternance d'au moins deux mélanges ou combinaisons de mélanges de caoutchouc différents, la deuxième couche de caoutchouc (5) (chapeau), radialement extérieure, qui forme la surface de contact avec la chaussée, étant formée radialement à l'extérieur sur la première couche de caoutchouc (4) (base) radialement intérieure qui recouvre la ceinture (2),
la première couche de caoutchouc (4) (base) radialement intérieure, qui recouvre la ceinture (2), étant formée d'au moins deux rubans extrudés (7, 8) de mélanges ou de combinaisons de mélanges de caoutchouc différents par enroulement en hélice autour de l'axe de la bande de roulement,
**caractérisé en ce que**
les deux rubans (7, 8) sont enroulés en plusieurs premières parties d'extension axiale (d) et au moins une deuxième partie d'extension axiale (c) de la bande de roulement (1) de telle sorte que dans les premières parties (d), seul le premier ruban (8) est enroulé en superposant ses spires et que dans la deuxième partie d'extension (c), tant le premier ruban (8) que le deuxième ruban (7) sont enroulés chacun en disposant les unes à côté des autres leurs propres spires, et en hélice les uns au-dessus des autres dans la direction radiale.

2. Procédé de fabrication d'une bande de roulement (1) pour un bandage pneumatique de roue de véhicule qui présente une ceinture (2) et une bande de roulement (1) constituée d'une première couche de caoutchouc (4) (base) qui recouvre la ceinture (2) et d'une deuxième couche de caoutchouc (5) (chapeau) radialement extérieure et qui forme la surface de contact avec la chaussée,
la première couche de caoutchouc (4) (base) qui recouvre la ceinture (2) étant formée dans la direction axiale A de la bande de roulement (1) par une alternance d'au moins deux mélanges ou combinaisons de mélanges de caoutchouc différents, la deuxième couche de caoutchouc (5) (chapeau), radialement extérieure, qui forme la surface de contact avec la chaussée, étant formée radialement à l'extérieur sur la première couche de caoutchouc (4) (base) radialement intérieure qui recouvre la ceinture (2),
la première couche de caoutchouc (4) (base) radialement intérieure, qui recouvre la ceinture (2), étant formée d'au moins deux rubans extrudés (7, 8) de mélanges ou de combinaisons de mélanges de caoutchouc différents par enroulement en hélice autour de l'axe de la bande de roulement,
**caractérisé en ce que**
les deux rubans (7, 8) sont enroulés en plusieurs premières parties d'extension axiale (d) et au moins une deuxième partie d'extension axiale de la bande de roulement (1) de telle sorte que dans les premières parties (d), seul le premier ruban (8) est enroulé en superposant ses spires, et que dans la deuxième partie d'extension (c), l'un des deux rubans (7, 8) est enroulé par superposition de ses spires et l'autre des deux rubans (7, 8) est enroulé en superposant ses spires ou en disposant les unes à côté des autres ses spires en forme d'hélice et radialement les uns au-dessus des autres, le niveau de superposition sélectionné pour le premier ruban (8) dans la première partie d'extension (d) étant supérieur au niveau de superposition des rubans (7, 8) dans la deuxième partie d'extension (c).

3. Procédé de fabrication d'une bande de roulement selon les caractéristiques des revendications 1 ou 2, dans lequel les deux rubans (7, 8) de différents mélanges de caoutchouc sont enroulés simultanément et dans la direction axiale en faisant succéder en alternance leurs spires en forme d'hélice.

4. Procédé de fabrication d'une bande de roulement selon les caractéristiques de la revendication 3, dans lequel au moins l'un des deux rubans (7, 8) est enroulé en hélice le long de sa longueur d'enroulement en modifiant de manière contrôlée la section transversale de ruban.

5. Procédé de fabrication d'une bande de roulement selon les caractéristiques de la revendication 4, dans lequel la section transversale des deux rubans (7, 8) est modifiée suivant la longueur d'enroulement dans l'enroulement en hélice.

6. Procédé de fabrication d'une bande de roulement selon les caractéristiques d'une ou plusieurs des revendications précédentes, dans lequel les différents mélanges de caoutchouc sont des mélanges de caoutchouc qui présentent des duretés différentes à l'état vulcanisé.

7. Procédé de fabrication d'une bande de roulement selon les caractéristiques d'une ou plusieurs des revendications précédentes, dans lequel les différents mélanges de caoutchouc sont des mélanges de caoutchouc qui présentent des modules d'élasticité différents à l'état vulcanisé.

8. Procédé de fabrication d'une bande de roulement selon les caractéristiques d'une ou plusieurs des revendications précédentes, dans lequel l'un des deux mélanges de caoutchouc est renforcé par de courtes fibres et l'autre mélange de caoutchouc ne contient pas de courtes fibres ou est renforcé par des deuxièmes courtes fibres, avec cependant un renfort différent de celui des premières courtes fibres, en particulier par le fait que le matériau, la densité, la longueur et/ou l'orientation des courtes fibres dans la bande de roulement (1) sont différents.
